# EUROPÄISCHE PATENTSCHRIFT

(11) **EP 0 450 514 B1**
(45) Veröffentlichungstag und Bekanntmachung des Hinweises auf die Patenterteilung: **11.01.1995**
(21) Anmeldenummer: 91104992.2
(22) Anmeldetag: 28.03.1991
(51) Int. Cl.: B60V 1/22

(54) **Stauflügelboot**
Ground-surface-effect wing plane
Bateau à aile à effet de coin

(30) Priorität: 04.04.1990 DE 4010877
(43) Veröffentlichungstag der Anmeldung: 09.10.1991
(73) Patentinhaber: Fischer, Hans-Otto, D-47877 Willich (DE)
(72) Erfinder: Fischer, Hans-Otto, D-47877 Willich (DE)
(74) Vertreter: Lippert, Hans-Joachim, Dipl.-Ing.

(56) Entgegenhaltungen:
- EP-A- 0 170 846
- EP-A- 0 295 652
- DE-A- 2 547 945
- DE-A- 2 606 405
- DE-A- 3 729 989
- US-A- 3 486 577
- US-A- 4 151 893

## Beschreibung

Die Erfindung betrifft ein Stauflügelboot, das auf einem dynamischen Luftkissen gleitet, mit einem zentralen Tragkörper, zwei seitlich am Tragkörper angebrachten Flügeln, einem Leitwerk, unter den Flügeln angeordneten, das dynamische Luftkissen seitlich abdichtende Stützschwimmern, einem am Tragkörper angeordneten Schuberzeuger sowie einer oben auf dem Tragkörper angeordneten Kabine.

Bei einem bekannten Bodeneffekt-Fahrzeug der genannten Art (GB-Z: "Air-Cushion Vehicles" FLIGHT International Supplement vom 25. Juni 1964, Seite 80), welches als 1-Propeller-Flugzeug konstruiert ist, ist der als Propeller ausgebildete Schubantrieb unmittelbar vor dem Tragkörper angeordnet, wobei die Rotationsachse des Propellers oberhalb der Tragflächen liegt. Bei diesem bekannten Stauflügelboot dient der Propeller zur Erzeugung eines Schubes, wobei die durch den Propeller erzeugte Luftströmung im Stand des Fahrzeugs sowie im Anfahrstadium im wesentlichen über das Fahrzeug und über die Tragflächen hinweggeht. Erst bei relativ hohen Geschwindigkeiten baut sich durch die Fahrtgeschwindigkeit ein rein dynamisches Luftkissen unter dem Tragkörper auf, der zum Wirksamwerden des Bodeneffektes führt. Ein solches Stauflügelboot ist in seiner Manövrierbarkeit eingeschränkt und kann keine Schräglage für Kurvenflug einnehmen.

Ausgehend von diesem Stand der Technik liegt der Erfindung die Aufgabe zugrunde, die Bodeneffektwirkung zu verstärken, wobei der Bodeneffekt auch bereits bei geringen Geschwindigkeiten wirksam werden soll, und eine gute Manövrierbarkeit, insbesondere bei Kurvenflug, zu gewährleisten, wobei eine Freiflugfähigkeit ausgeschlossen sein soll.

Erfindungsgemäß wird die Aufgabe dadurch gelöst, daß die Flügel eine feste, profilgebende Struktur aufweisen, daß eine einen Stauraum bildende Stauflügelstruktur von den Flügelhinterkanten zum Heck des Tragkörpers vorgesehen ist, welche nach hinten durch steife Kanten begrenzt ist, daß vom Tragkörper zu den steifen Hinterkanten der Stauflügelstruktur stete Stützstreben verlaufen, und daß an den steifen Hinterkanten flexible, den Stauraum nach hinten abdichtende, einseitig bespannte Schürzen vorgesehen sind, die bei der Start- und Landephase in etwa parallel auf dem Wasser aufliegen, und daß das Verhältnis von Spannweite zu aufgespanntem Flächeninhalt und die Leistung des Schuberzeugers so aufeinander abgestimmt sind, daß das Stauflügelboot freiflugunfähig ist.

Aufgrund der erfindungsgemäßen Konstruktion stellt sich der den Bodeneffekt bewirkende Luftstau unter dem Tragkörper zu einem sehr frühen Zeitpunkt ein und erzeugt bereits bei geringen Geschwindigkeiten einen kräftigen Auftrieb für das Fahrzeug. Dadurch wird schon in einem frühen Stadium der Startphase der Bodenwiderstand erheblich reduziert, so daß sich ohne Erhöhung der Antriebsleistung eine sehr rasche Geschwindigkeitszunahme einstellen kann.

Durch die Unterteilung des Tragwerks in eine feste profilgebende Struktur einerseits und eine den Stauraum hauptsächlich bildende Stauflügelstruktur andererseits, wird eine sehr leichte, aber dennoch ausreichend fest gegen Wasserlasten wirkende Tragwerkskonstruktion bereitgestellt.

Um die Abwassergeschwindigkeit so klein wie möglich zu halten, ist das Tragwerk, daß das größte Bauvolumen darstellt, so leicht wie möglich, aber ausreichend fest gegen Wasserlasten zu gestalten. Daher wird die rückwärtige Struktur, besonders bei kleinen Geräten, vorzugsweise nicht mit der üblichen Rippen-Spanten-Struktur und mit steifem Werkstoff beplankt, sondern durch eine flexible Bespannung elastisch ausgeführt. Typischerweise besitzt die Stauflügelstruktur die Gestalt einer flexiblen doppelten Bespannung und die steifen Hinterkanten bestehen aus einem vorgespannten Seil. Durch die doppelte Bespannung wird eine optimale Profilierung erreicht, die zusätzlich hohe Auftriebswerte liefert.

In bevorzugter Ausführung sind zwischen den steifen Hinterkanten und den Schürzen federnde Stützelemente angebracht, deren Steifigkeit typischerweise so bemessen ist, daß diese bei Wasserberührung ausweichen.

Ferner können an die Stützschwimmer den Stauraum zusätzlich seitlich abdichtende, durch ihre Schwerkraft selbstätig herausfallende und mit an ihrer Unterseite mit Auftriebskörpern versehene Schwerte angebracht sein. Durch diese Anordnung wird erreicht, daß eine zum sehr engen Kurvenflug notwendige Schräglage eingenommen werden kann, ohne daß das Luftkissen auf der gehobenen Flügelseite einen Verlust erfährt.

Die Schwerter sind in bevorzugter Ausführung dabei vorne an einem starr am Flügel angebrachten Bolzen frei angelenkt.

Die Schürzen können dabei mechanisch oder über kinetische Hilfsmittel in Abhängigkeit der Schwerter angesteuert werden.

Die Erfindung ist im folgenden beispielsweise anhand der Zeichnung veranschaulicht. Dabei zeigen:

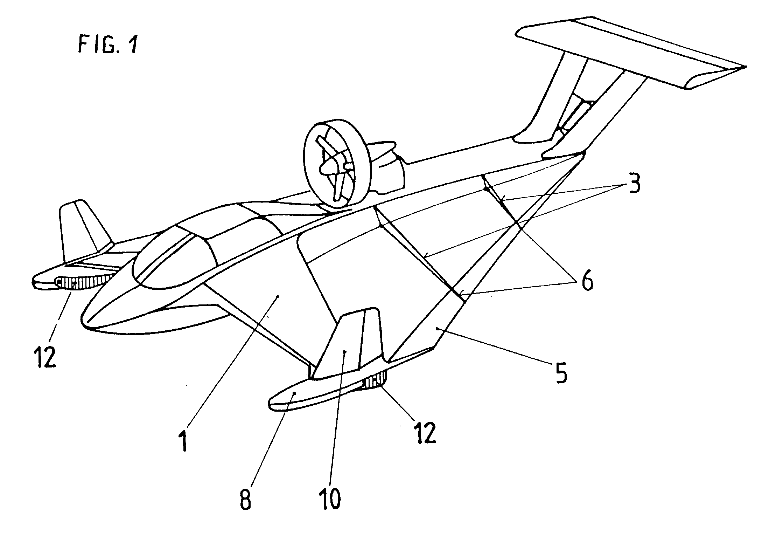

- Fig. 1: zeigt eine Gesamtansicht des Stauflügelbootes.

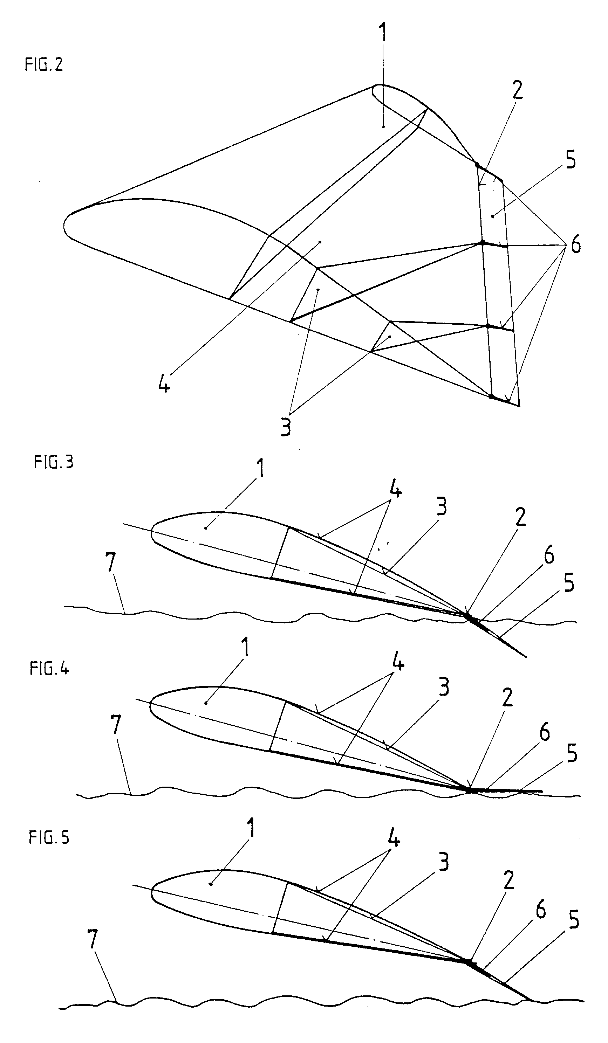

- Fig. 2: zeigt den erfindungsgemäßen Tragwerksaufbau. Die Flügelnase 1 besteht aus einer profilgebenden festen Struktur, z. B. aus Holz, Kunststoff oder Metall. Die Flügelhinterkante 2 besteht aus einem vorgespannten Seil bei einer flexiblen Bespannung oder einer steifen Hinterleiste im Falle einer steifen Beplankung 4. Zur Abstützung der Hinterkante, die bei Start und Landung im Wasser liegt und damit Wasserschlägen ausgesetzt ist, werden steife Stützstreben 3 eingesetzt, die besonders bei einem Seil als Hinterkante ein Auswölben unter Staudruck zweck Druckerhaltung verhindern müssen.
An der Hinterkante wird eine flexible Schürze 5 angeordnet, die im statischen Verdrängungsfall die Wasserfläche nach unten durchdringt. Da diese Schürze nur einseitig ausgeführt wird, ist eine Wasseraufnahme in die sonst vorhandenen Hohlräume ausgeschlossen.

Die flexible Schürze **5** wird von Federstreben **6** so abgestützt, daß einerseits ein Flattern im Flug verhindert wird, andererseits aber ein Ausweichen bei Wasserschlägen erlaubt, wobei die Federsteifigkeit so abgestimmt ist, daß bei schneller Wasserfahrt, wie z. B. beim Start, die Schürze parallel auf dem Wasser aufliegt und damit den Startwiderstand deutlich vermindert. Dies ist erforderlich, um den Leistungsbedarf in dieser Phase so gering wie möglich zu halten, damit der anfangs beschriebene Freiflug und damit die Einstufung als Luftfahrzeug vermieden wird.

**Fig. 3** zeigt die Lage der Schürze **5** und der Federstrebe **6** im statischen Verdrängungszustand.

**Fig. 4** zeigt die Start- und Landephase mit aus dem Wasserdruck ausgewichener paralleler Schürze.

**Fig. 5** zeigt den bodennahen Flugzustand mit abdichtender federnder Schürze, wobei **7** jeweils die Wasseroberfläche markiert. Durch diese Anordnung werden die hohen Lasten auf die tragende Struktur, die bei Wasserberührung, z. B. durch Wellen, vermieden, was zur weiteren Gewichtsreduzierung und erhöhten Sicherheit beiträgt.

Um die notwendige Triebwerksleistungsminimierung beim Start und im bodennahen Flug zu erreichen, um so den Freiflug zu verhindern, muß auch eine seitliche Abdichtung erfolgen, wobei bei Überschreiten einer ausreichenden Höhe über Wasser der Widerstand extrem zunehmen muß. Dies wird durch den stark ansteigenden induzierten Widerstand bei dem gewählten extrem niedrigen Seitenverhältnis - Spannweite: Flächeninhalt - erreicht. Dieser übersteigt den Luftwiderstand des gesamten Bootes und verhindert wirksam das Erreichen von Flughöhe größer als ca. 1/3 der Spannweite.

Der Aufbau des dynamischen Luftkissens verlangt daher eine Abdichtung im bodennahen Flug bis zu einer zu wählenden Höhe auch an den Flügelspitzen, die bei Booten als Stützschwimmer zur Kentersicherung ausgebildet sind. Um im statischen Schwimmzustand eine dem Gewicht des beladenen Bootes entsprechende Verdrängung zu erhalten, ist ein Tiefgang von Rumpf und Stützschwimmern unerläßlich. Dieser muß so niedrig wie möglich gehalten werden, um einerseits einen bodennahen Flug mit kleinstem Spalt zwischen Flügelhinterkante und Wasseroberfläche zu ermöglichen und andererseits den Widerstand in der Startphase so klein wie möglich zu halten. Daher sind Durchdringungen der aus der Hinterkante gebildeten Elemente im Start- und Flugzustand so klein wie möglich zu halten.

Um dies zu gewährleisten, wird an den Außenschwimmern ein vorn angelenktes senkrechtes Schwert angebracht, das so ausgebildet ist, daß es im Schwimmzustand auf dem Wasser aufliegt, also den Tiefgang und damit den Wasserwiderstand nicht erhöht, aber beim Auftauchen in die Gleitfahrt und im bodennahen Flug herunterhängen kann, um den Stauraum seitlich abzudichten. Ferner wird damit erreicht, daß bei einseitiger Wasserberührung, z. B. durch Wellen, keine Beschleunigungslasten und -momente auftreten.

Mit dieser erfindungsgemäßen Anordnung wird weiter erreicht, daß eine zum engen Kurvenflug notwendige Schräglage eingenommen werden kann, ohne daß das Luftkissen auf der gehobenen Flügelseite abschließt. Für das Einnehmen der Schräglage sind an den Flügelspitzen Querruder angeordnet, wobei die Wirksamkeit in Bodennähe dadurch eingeschränkt wird, daß der abzusenkende Flügel näher an den Boden kommt und damit das Luftkissen verdichtet, was die Schräglage behindert und zu großen Querrudern mit entsprechenden Gewichten, Widerständen und Ansteuerungen zwingt. Außerdem geht auf der angehobenen Flügelseite ein Teil des Stauauftriebs verloren, so daß der Gesamtauftrieb verringert wird, was zu Wasserberührung führt, die nur durch gleichzeitige Höhenruderbetätigung vermieden werden kann. Damit werden wiederum pilotenähnliche Anforderungen gestellt, die der Einstufung als Boot widerlaufen.

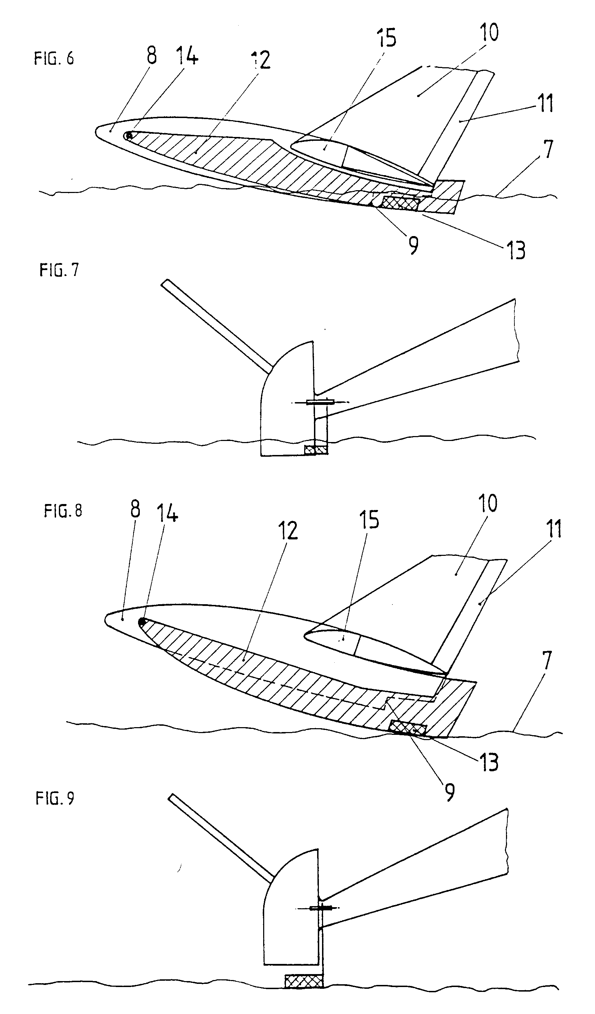

**Fig. 6** zeigt ein Ausführungsbeispiel der erfindungsgemäßen Ausbildung der seitlichen Abdichtung.

Der Stützschwimmer **8**, mit Stufe **9**, dem Außenflügel **10** und dem Querruder **11**, besitzt erfindungsgemäß das durch Schwerkraft ausschwenkbare Schwert **12**, mit einem angeflanschten Auftriebskörper **13** und ist in dem Bolzen **14** frei angelenkt. Diese Teile werden am Flügel **15** starr befestigt.

Diese Darstellung entspricht dem statischen Verdrängungszustand, bei dem der Schwimmer **8** bis zur Hinterkante eingetaucht ist.

**Fig. 7** zeigt den gleichen Verdrängungszustand aus Sicht von vorne.

**Fig. 8** zeigt den Zustand im bodennahen Flug, bei dem das Schwert bis zu einem Anschlag durch Schwerkraft ausgeschwenkt ist und so den Stauraum nach außen abdichtet. Bei einer Wasserberührung, z. B. durch Wellen, würde durch den Schwimmkörper **13** ein Ausweichen des Schwertes entstehen und somit Lasten auf die Struktur vermieden.

**Fig. 9** zeigt den gleichen bodennahen Flugzustand aus Sicht von vorne.

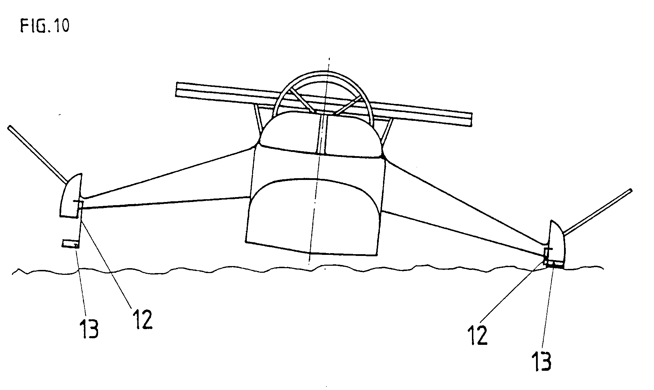

**Fig. 10** zeigt die abdichtende Wirkung beim Kurvenflug durch einseitiges Heraushängen des Schwertes.

Eine weitere vorteilhafte Ausbildung ergibt sich durch Kombination der beiden Abdichtungen, wobei die Ansteuerung der hinteren Schürze durch das seitliche Schwert entweder durch mechanische Anlenkung oder über Steuerelemente möglich ist, da das herunterhängende Schwert als Abstandsgeber benutzt werden kann. Die Aussteuerung der Schürze und/oder des Schwertes kann aber auch von Hand erfolgen, und zwar durch den Bootführer.

Ein so gestaltetes Stauflügelboot ermöglicht einen Einsatz als echtes Boot, für das keine besonderen Zulassungen erforderlich sind. Ein Freiflug mit einer für den Start notwendigen Triebwerksleistung wird durch die Konfiguration verhindert, was die Einstufung als Boot und nicht als Flugzeug ermöglicht.

## Patentansprüche

1. Stauflügelboot, das auf einem dynamischen Luftkissen gleitet, mit einem zentralen Tragkörper, zwei seitlich am Tragkörper angebrachten Flügeln, einem Leitwerk, unter den Flügeln angeordneten, das dynamische Luftkissen seitlich abdichtende Stützschwimmern, einem am Tragkörper angeordneten Schuberzeuger sowie einer oben auf dem Tragkörper angeordneten Kabine, **dadurch gekennzeichnet**,
daß die Flügel (15) eine feste profilgebende Struktur (1) aufweisen und
daß eine einen Stauraum bildende Stauflügelstruktur (4) von den Hinterkanten der Flügel (15) zum Heck des Tragkörpers vorgesehen ist, welche nach hinten durch steife Kanten (2) begrenzt ist,
daß vom Tragkörper zu den steifen Hinterkanten (2) der Stauflügelstruktur (4) stete Stützstreben (3) verlaufen,
daß an den steifen Hinterkanten (2) flexible, den Stauraum nach hinten abdichtende, einseitig bespannte Schürzen (5) vorgesehen sind, die bei der Start- und Landephase in etwa parallel auf dem Wasser aufliegen, und daß das Verhältnis von Spannweite zu aufgespanntem Flächeninhalt und die Leistung des Schuberzeugers so aufeinander abgestimmt sind, daß das Stauflügelboot freiflugunfähig ist.

2. Stauflügelboot nach Anspruch 1, **dadurch gekennzeichnet**, daß die Stauflügelstruktur (4) die Gestalt einer flexiblen doppelten Bespannung besitzt und daß die steifen Hinterkanten (2) aus einem vorgespannten Seil bestehen.

3. Stauflügelboot nach einem der Ansprüche 1 bis 2, **dadurch gekennzeichnet**, daß zwischen den steifen Hinterkanten (2) und den Schürzen (5) federnde Stützelemente (6) angebracht sind.

4. Stauflügelboot nach Anspruch 3, **dadurch gekennzeichnet**, daß die Steifigkeit der federnden Stützelemente (6) so bemessen ist, daß diese bei Wasserberührung ausweichen.

5. Stauflügelboot nach einem der Ansprüche 1 bis 4, **dadurch gekennzeichnet**, daß die Stützschwimmer (8) den Stauraum seitlich abdichtende, durch die Schwerkraft selbsttätig herausfallende und mit an ihrer Unterseite mit Auftriebskörpern (13) versehene Schwerter (12) aufweisen.

6. Stauflügelboot nach Anspruch 5, **dadurch gekennzeichnet**, daß die Schwerter (12) vorne an einem starr am Flügel (15) angebrachten Bolzen (14) frei angelenkt sind.

7. Stauflügelboot nach Anspruch 5 oder 6, **dadurch gekennzeichnet**, daß die Schürzen (5) mechanisch oder über kinetische Hilfsmittel in Abhängigkeit der Schwerter (12) ansteuerbar sind.

8. Stauflügelboot nach Anspruch 7, **dadurch gekennzeichnet**, daß die Schürzen (5) und/oder die Schwerter (12) von Hand ansteuerbar sind.

## Claims

1. A ram-wing boat that travels on a dynamic air cushion with a central support body, two wings located at both sides of the central support body, a control surface, pontoons located under the wings which are sealing the air cushion laterally, a thrust generator situated at the centre of support body and a cabin located on top of the support body, characterised in that the wings (15) consist of a firm, shape-giving structure (1),
that there is provided an elastic ram-wing structure (4) creating a plenum thereunder, extending from the trailing edges of the wings (15) to the tail of the central support body, whereby said elastic ram-wing (4) structure is limited rearwardly by its trailing edges (2), supported by rigid support struts (3) extending from the central support body to the trailing edges (2) of said ram-wing structure (4),
that there are provided flexible, single walled skirts (5) at the trailing edges (2) which act to seal said plenum, said skirts being arranged to lie parallel to the water surface in the take-off and landing phases,
and that the ratio of the wing span to the wing area and the power of the thrust generator are tuned in such a way that the ram-wing boat is not able for free flight.

2. Ram-wing boat according to claim 1, characterised in that the ram-wing structure (4) comprises a flexible double covering and the trailing edges (2) consist of a pretensioned cable.

3. Ram-wing boat according to claim 1 or 2, characterised in that there are provided shock-absorbing support elements (6) between the trailing edges (2) and the skirts (5).

4. Ram-wing boat according to claim 3, characterised in that the stiffness of the shock-absorbing support elements (6) is such that they give when water or wave impacts occur.

5. Ram-wing boat according to any one of claims 1 to 4, characterised in that the pontoons (8) laterally seal the plenum by gravity actuated leeboards said leeboards having floats (13) along their lower edges.

6. Ram-wing boat according to claim 5, characterised in that the leeboards (12) are freely pivoted about a pivot (14) which is rigidly mounted on the wing (15).

7. Ram-wing boat according to claim 5 or 6, characterised in that said skirts (5) are controlled mechanically or by kinetic devices, the position of said skirts (5) being dependent on the position of the lateral leeboards (12).

8. Ram-wing boat according to claim 7, characterised in that said skirts (5) and/or the lateral leeboards (12) can be controlled manually.

## Revendications

1. Embarcation à ailes à effet de sol, qui glisse sur un coussin d'air dynamique, comprenant un corps porteur central, deux ailes fixées latéralement au corps porteur, un empennage, des flotteurs d'appui qui sont disposés au-dessous des ailes et enferment latéralement le coussin d'air dynamique, un générateur de poussée disposé sur le corps porteur, ainsi qu'une cabine située en haut sur le corps porteur, caractérisé
en ce que les ailes (15) présentent une structure profilée fixe (1) et
en ce qu'il est prévu, entre les bords arrière des ailes (15) et l'arrière du corps porteur, une structure d'aile (4) à effet de sol, qui forme une chambre d'accumulation et qui est limitée vers l'arrière par des arêtes rigides (2)
en ce que des jambes de force fixes de soutien (3) s'étendent entre le corps porteur et les arêtes arrière rigides (2) de la structure d'aile (4) ,
en ce qu'il est prévu, sur les arêtes arrière rigides (2), des jupes (5) tendues d'un côté, qui ferment vers l'arrière la chambre d'accumulation et qui sont couchées sur l'eau, à peu prés parallèlement, dans les phases de démarrage et d'atterrissage,
et en ce que le rapport de l'envergure à l'aire déployée et la puissance du générateur de poussée sont adaptés l'un à l'autre de sorte que l'embarcation à ailes à effet de sol soit incapable de vol libre.

2. Embarcation à ailes à effet de sol selon la revendication 1, caractérisée en ce que la structure d'aile (4) a la forme d'un entoilage flexible double et en ce que les arêtes arrière rigides (2) sont constitués par un câble pré-tendu.

3. Embarcation à ailes à effet de sol selon la revendication 1 ou 2, caractérisée en ce que des éléments de soutien à ressort (6) sont disposés entre les arêtes arrière rigides (2) et les jupes (5).

4. Embarcation à ailes à effet de sol selon la revendication 3, caractérisée en ce que la rigidité des éléments de soutien à ressort (6) est dimensionnée de sorte que ceux-ci cèdent en entrant en contact avec l'eau.

5. Embarcation à ailes à effet de sol selon l'une quelconque des revendications 1 à 4, caractérisée en ce que les flotteurs d'appui (8) comportent des plans de dérive (12) qui ferment latéralement la chambre d'accumulation, sortent automatiquement sous l'effet de la pesanteur et sont munies de corps de sustentation (13) du côté inférieur.

6. Embarcation à ailes à effet de sol selon la revendication 5, caractérisée en ce que les plans de dérive (12) sont articulés librement, à l'avant, sur un axe (14) qui est fixé rigidement à l'aile (15).

7. Embarcation à ailes à effet de sol selon la revendication 5 ou 6, caractérisée en ce que les jupes (5) peuvent être commandées mécaniquement ou par l'intermédiaire de moyens cinétiques auxiliaires sous la dépendance des plans de dérive (12).

8. Embarcation à ailes à effet de sol selon la revendication 7, caractérisée en ce que les jupes (5) et/ou les plans de dérive (12) peuvent être commandés à la main.
